# EUROPÄISCHE PATENTSCHRIFT

(11) **EP 2 751 977 B1**
(45) Veröffentlichungstag und Bekanntmachung des Hinweises auf die Patenterteilung: **15.04.2020**
(21) Anmeldenummer: 12750736.6
(22) Anmeldetag: 15.08.2012
(51) Int. Cl.: H04L 29/08, G05B 19/042, G05B 19/418

(54) **VERFAHREN ZUM BEDIENEN EINES FELDGERÄTES**
METHOD FOR OPERATING A FIELD DEVICE
PROCÉDÉ POUR FAIRE FONCTIONNER UN APPAREIL DE TERRAIN

(30) Priorität: 30.08.2011 DE 102011081796
(43) Veröffentlichungstag der Anmeldung: 09.07.2014
(73) Patentinhaber: Endress+Hauser SE+Co. KG, 79689 Maulburg (DE)
(72) Erfinder: BARET, Marc, F-68680 Kembs (FR); BIRGEL, Eric, 79650 Schopfheim (DE); FISCHER, Julien, F-68300 Saint Louis (FR); LEFEBVRE, Martine, F-68730 Blotzheim (FR); SEGER, Andrea, 79669 Zell (DE); WEIBEL, Mathieu, 46143 Greenwood, IN (US)
(74) Vertreter: Andres, Angelika Maria
(86) Internationale Anmeldenummer: PCT/EP2012/065957
(87) Internationale Veröffentlichungsnummer: WO 2013/029996

(56) Entgegenhaltungen:
- WO-A1-2007/077189
- WO-A1-2009/074544
- DE-A1-102007 047 061

## Beschreibung

Die Erfindung bezieht sich auf ein Verfahren zum Bedienen eines Feldgerätes der Prozessautomatisierungstechnik,
wobei Daten vermittels wenigstens eines Protokolls zwischen dem Feldgerät und einem Bedienprogramm ausgetauscht werden,
wobei das Protokoll Basiskommandos aufweist, über welche Basiskommandos Basisfunktionen des Feldgerätes aufgerufen werden, über welche Basisfunktionen jedes mit dem Protokoll kompatible Feldgerät verfügt.

Ferner bezieht sich die Erfindung auf ein Feldgerät und eine Bediengerät zur Durchführung des Verfahrens, sowie auf ein Computerprogrammprodukt. Aus dem Stand der Technik sind Verfahren bekannt geworden, vermittels denen bspw. anhand einer Device-Description, kurz DD, d.h. einer Gerätebeschreibung, ein Feldgerät bedient werden kann. Eine solche Device-Description beschreibt die Gerätefunktionalitäten eines Feldgerätes. Durch die Device-Description können bestimmte zur Verfügung stehende Kommandos eines Protokolls mit bestimmten Funktionalitäten eines Feldgerätes verknüpft werden. Die Kommandos die dafür verwendet werden können, sind durch das zugrunde liegende Protokoll, das das Feldgerät beherrscht, um bspw. über einen Feldbus an den es angeschlossen ist, kommunizieren zu können, vorgegeben. Bekannt ist z.B. das Dokument WO 2009/074544 A1.

Derartige Verfahren sind bspw. in Form von Programmen ausgeführt. Vermittels dieser Programme kann ein Nutzer Daten an das Feldgerät übertragen oder Daten von dem Feldgerät erhalten, die zur Steuerung der Anlage, des darin ablaufenden Prozesses oder des Feldgerätes selbst dienen. Die Daten werden dabei zwischen dem Programm und dem Feldgerät übertragen. Die Übertragungsstrecke ist bspw. ein drahtgebundener oder drahtloser Feldbus. Bei den vorgenannten Programmen kann es sich bspw. eines der Programme AMS, PDM, Fieldcare, FieldXpert oder FieldCommunicator handeln.

In der Prozess- und Automatisierungstechnik verwendete Feldgeräte können bspw. gem. dem HART-Protokoll, Profibus oder dem FOUNDATION Fieldbus Protokoll kommunizieren. Diese Protokolle weisen verschiedene Arten von Kommandos auf. Zum einen die Basiskommandos, über die jedes mit dem entsprechenden Feldbusprotokoll kompatible Feldgerät verfügen muss.

Ferne existiert eine Gruppe von Kommandos, die als "common practice commands" bezeichnet werden und auf die sich die unterschiedliche Hersteller geeinigt haben. Bspw. verfügen Feldgeräte eines spezifischen Typs, bspw. Durchflussmessgeräte, über eine gewisse Anzahl an common "practice commands".

Außerdem existieren sog. "device specific commands" vermittels denen Spezialfunktionen eines bestimmten Feldgerätes aufgerufen werden können. Diese Kommandos werden vom Hersteller eines Feldgerätes speziell für dieses Feldgerät und/oder deren Einsatzzweck vorgegeben. Eine Steuereinheit für eine industrielle Anlage muss diese Kommandos kennen, um den Betrieb der Anlage gewährleisten und/oder um die Feldgeräte an die vorgegebenen Anforderungen komplett konfigurieren zu können. Insbesondere ist dabei darauf zu achten, dass dasselbe Kommando nicht mehrfach vergeben ist und bei unterschiedlichen Felgeräten unterschiedliche Funktionen auslöst.

Aufgrund dieser verschiedenen zur Verfügung stehenden Bedienprogramme ist es aus dem Stand der Technik bekannt geworden, für jedes dieser Bedienprogramme auch einen eigenen Treiber, d.h. eine eigene Device-Description zu erstellen.

Der Erfindung liegt die Aufgabe zugrunde, eine einfache universelle Bedienung von Feldgeräten vorzuschlagen.

Die Aufgabe wir durch ein Verfahren, ein Feldgerät, ein Bediengerät und ein Computerprogrammprodukt gelöst.

Hinsichtlich des Verfahrens wird die Aufgabe dadurch gelöst, dass nur Basiskommandos des Protokolls verwendet werden, um Daten zwischen dem Bedienprogramm und dem Feldgerät zu übertragen.

Insbesondere kann das Bedienprogramm nur ein oder zwei Basiskommandos verwenden, um Daten von dem Feldgerät abzurufen. Diese Basiskommandos können dann nicht nur zur Abfrage von Bestimmten Prozessrelevanten Daten eines Feldgerätes, sondern auch von mehreren Feldgeräten dienen. Außerdem kann ein derartiges Verfahren nicht nur bei einem Feldgerät mit einer Bestimmten Steuereinheit, wie bspw. AMS verwendet werden. Durch die vorgeschlagene Erfindung ist es auch möglich, Feldgeräte unabhängig von dem verwendeten Host System anzusprechen und Daten von dem Feldgerät oder mehreren Feldgeräten abzurufen.

Durch die vorgeschlagene Erfindung können auch Feldgeräte verschiedenen Typs, wie bspw. verschiedene Durchflussmessgeräte, in einer Anlage bedient werden, ohne dass jeweils ein spezieller Treiber benötigt wird. Es ist dabei eine Idee der vorliegenden Erfindung keine gerätespezifischen Treiber mehr zu verwenden, sondern Bedienprogramme für spezielle Anwendungsfälle, durch die verschiedene Feldgeräte einheitlich bedient werden können, vorzuschlagen.

Bei dem vorgeschlagenen Bedienprogramm kann es sich bspw. ein Programm handeln, dass Kurven anzeigt, Diagnoseinformationen von dem Feldgerät abruft, Messwerte berechnet und/oder anzeigt, Statistiken erstellt, einen SIL-Modus einstellt etc.

Das Bediengerät und das Feldgerät weisen zu diesem Zweck vorzugsweise jeweils eine korrespondierende Kommunikationsschnittstelle auf, über die Daten entsprechend einem Protokoll, das beide Geräte unterstützen übertragbar sind. Über diese Schnittstelle kann das Feldgerät dem Bediengerät oder umgekehrt mitteilen, welche Funktionen bzw. Bedienprogramm ein dem Feldgerät bzw. dem Bediengerät zur Verfügung stehen. Vermittels eines Bedienprogramms können dann die entsprechenden Werte von dem Feldgerät abgefragt und vorzugsweise auch auf dem Bediengerät dargestellt werden.

Ist eine von einem Bedienprogramm unterstützte Funktion in dem Feldgerät nicht vorhanden kann der Nutzer durch eine entsprechende Mitteilung darauf hingewiesen werden.

Vermittels eines Bedienprogramms kann auch eine vorausschauende Wartung des Feldgerätes oder der Anlage erfolgen. Durch ein anderes Bedienprogramm können mehrere Feldgeräte miteinander synchronisiert werden. Ein weiteres Bedienprogramm kann bspw. die in dem Feldgerät vorhandene Konfiguration, die bspw. durch eine Parametrierung des Feldgerätes gegeben ist, von dem Feldgerät abfragen, und mit einer bspw. in dem Bediengerät hinterlegten Konfiguration vergleichen. Damit kann die in dem Feldgerät vorliegende Konfiguration überprüft und/oder verändert, insbesondere aktualisiert, werden. Für jeden der o.g. Anwendungsfälle ist vorzugsweise ein einziges Bedienprogramm zuständig, das von einem Nutzer auf dem Bediengerät geladen und dort ausführbar ist.

In einer Ausführungsform des Verfahrens weist das Protokoll ferner Ergänzungskommandos auf, über eine spezifische Ergänzungsfunktionen eines jeweiligen Feldgerätetyps aufgerufen werden, wobei diese spezifischen Ergänzungsfunktionen von dem Feldgerätetyp abhängen, dem das Feldgerät angehört.

In einer weiteren Ausführungsform des Verfahrens werden Daten zwischen dem Feldgerät und dem Bedienprogramm übertragen, ohne dass eine Gerätebeschreibungsdatei verwendet wird, wobei die Gerätebeschreibungsdatei angibt, vermittels welcher der zur Verfügung stehenden Ergänzungskommandos des verwendeten Protokolls, die Ergänzungsfunktionen des Feldgerätes abrufbar sind. Bei den Ergänzungskommandos kann es sich bspw. um sog. "common practice commands" oder "device-specific commands" handeln, deren Funktion innerhalb des Protokolls frei definier bar ist, wohingegen die Funktion der Basiskommandos durch die Wahl des Protokolls vorgegeben sind.

In einer weiteren Ausführungsform des Verfahrens werden in dem Bedienprogramm Basiskommandos entsprechend einer vorgegebenen Reihenfolge hinterlegt, entsprechend welcher Reihenfolge die Basiskommandos an das Feldgerät übermittelt werden. Bspw. kann zunächst die Feldgeräte-ID vermittels eines ersten Basiskommandos abgefragt werden und anschließend bspw. Messwerte des Feldgerätes vermittels eines zweiten Basiskommandos abgerufen werden. Analog können andere Funktionen des Feldgerätes, die vermittels des Bedienprogramms abrufbar sind, aufgerufen werden.

In einer weiteren Ausführungsform des Verfahrens wird aus den vermittels der Basiskommandos des Protokolls abgefragten Daten, bei denen es sich insbesondere um eine Gerätekennung und/oder Messwerte des Feldgerätes handelt, eine Anzeige auf einer Anzeigeeinheit des Bediengerätes erstellt, die bspw. einen Messwert, einen Messwertverlauf, einen daraus abgeleiteten Wert oder einen Zustand des Feldgerätes angibt.

In einer weiteren Ausführungsform des Verfahrens werden vermittels des Bedienprogramms Daten des Feldgerätes dargestellt, welche Daten von dem Feldgerät über ein einziges Basiskommando bzw. höchstens zwei, allerhöchstens drei Basiskommandos abrufbar sind.

In einer weiteren Ausführungsform des Verfahrens dient das Bedienprogramm zur Darstellung der von mehreren Feldgeräten vermittels eines einzigen Basiskommandos abrufbaren Daten.

In einer weiteren Ausführungsform des Verfahrens werden vermittels jeweils eines Bedienprogramms Daten von mehreren Feldgeräten dargestellt, welche Daten vermittels eines einzigen Basiskommandos von dem jeweiligen Feldgerät abgerufen werden, wobei die Feldgeräte vorzugsweise über einen Feldbus miteinander verbunden sind.

In einer weiteren Ausführungsform des Verfahrens wird eine in dem Feldgerät vorliegende und an das Bedienprogramm übertragene Konfiguration des Feldgerätes mit einer in dem Bedienprogramm vorliegenden Referenzkonfiguration des Feldgerätes vermittels des Bedienprogramms verglichen, wobei bei einer von der Referenzkonfiguration abweichenden Konfiguration des Feldgerätes, die Referenzkonfiguration an das Feldgerät übertragen wird.

In einer weiteren Ausführungsform des Verfahrens läuft das Bedienprogramm auf einem Handbediengerät ab, welches vorzugsweise eine Internetverbindung aufweist.

In einer weiteren Ausführungsform des Verfahrens wird das Bedienprogramm von einem Server über das Internet in einen Speicher des Bediengerätes übertragen.

In einer weiteren Ausführungsform des Verfahrens werden auf dem Server mehrere Bedienprogramme zur Verfügung gestellt, um das Feldgerät zu bedienen, wobei durch die Bedienprogramme unterschiedliche Bedienfunktionen zur Verfügung gestellt werden.

In einer weiteren Ausführungsform des Verfahrens weist das Feldgerät eine insbesondere drahtlose Kommunikationsschnittstelle auf, wobei Daten zwischen dem Feldgerät und dem Bediengerät übertragen werden.

Die Aufgabe wird hinsichtlich des Feldgerätes durch ein zur Durchführung des Verfahrens nach einer der vorgenannten Ausführungsformen geeignetes Feldgerät mit einer insbesondere drahtlosen Kommunikationsschnittstelle gelöst.

Hinsichtlich des Bediengeräts wird die Aufgabe durch ein Bediengerät mit einem Bedienprogramm zur Durchführung des Verfahrens nach gem. einer der vorgenannten Ausführungsformen gelöst.

Hinsichtlich des Computerprogrammprodukts wir die Aufgabe durch ein Computerprogrammprodukt mit einem computerlesbaren Speicher gelöst, in welchem Speicher Programmcodemittel hinterlegt sind, die wenn sie von einem Computersystem ausgeführt werden, das Verfahren nach einer der vorherigen Ausführungsformen ausführen.

Die Erfindung wird anhand der nachfolgenden Zeichnungen näher erläutert. Es zeigt:

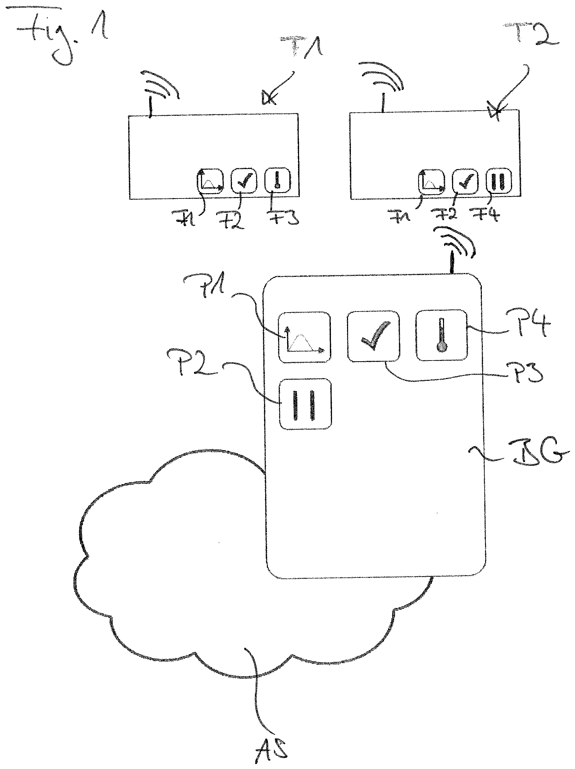

Fig. 1: eine schematische Darstellung einer Anwendung der vorgeschlagenen Erfindung.

Figur 1 zeigt eine erstes und eines zweites Feldgerät T1, T2, die jeweils über feldgerätespezifische Funktionen F1-F4 verfügen. Die Feldgeräte T1, T2 können wie in Figur 1 gezeigt über eine drahtlose Kommunikationsschnittstelle verfügen. Denkbar ist aber auch eine kabelgebundene Kommunikationsschnittstelle. Über die Kommunikationsschnittstelle können die Feldgeräte T1, T2 miteinander und/oder mit einer übergeordneten Einheit, nicht gezeigt, sowie mit einem Bediengerät BG verbunden sein.

Über das Bediengerät BG, welches bevorzugt eine Anzeigeinheit aufweist, können das bzw. die Bedienprogramme P1-P4 angezeigt und/oder aufgerufen werden. Somit lassen sich insbesondere Daten von einem Feldgerät T1, T2 anzeigen, das selbst über keine eigene Anzeigeeinheit verfügt. Bspw. verfügen die in Figur 1 gezeigten Feldgeräte T1, T2 über keine eigene Anzeigeeinheit am Feldgerät.

Ferner kann das Bediengerät BG, bei dem es sich bspw. um ein Smartphone handelt, über eine Kommunikationsverbindung wie bspw. dem Internet mit einem Server AS verbunden sein, von dem die Bedienprogramme P1-P4 in das Bediengerät BG geladen werden können. Auf dem Server und/oder dem Bediengerät BG können mehrere unterschiedliche Bedienprogramme P1-P4 gespeichert sein, so dass ein Nutzer eines oder mehrere Bedienprogramme P1-P4 je nach Bedarf aufrufen kann. Für diese Bedienprogramme P1-P4 kann seitens des Anbieters der Programme eine Gebühr erhoben werden.

So weist das Feldgerät T1 bspw. durch die Piktogramme dargestellte Funktionen F1, F2, F3 zur Kurvendarstellung F1, zur Gerätediagnose F2 und zur Temperaturmesswertbestimmung F3 auf. Das Feldgerät T2 weist Funktionen zur Kurvendarstellung F1, zur Diagnose F2 und zur Durchflussbestimmung F4 auf. Das in Figur 1 gezeigte Bediengerät BG weist entsprechende Bedienprogramme P1-P4 auf, die jeweils eine, besonders bevorzugt genau eine, der in dem Feldgerät T1, T2 vorhandenen Funktionen F1, F2, F3 bzw. F1, F2, F4 unterstützt. In dem gezeigten Bediengerät BG sind Bedienprogramme P1-P4 zur Darstellung eines Kurvenverlaufs P1, zur Diagnose P3, zur Temperaturmesswertanzeige P4 und zur Durchflussmesswertanzeige P2 vorhanden.

Durch das Verwenden von Basiskommandos kann nun ein relativ unspezifisches Bediengerät BG wie bspw. ein Smartphone zum Bedienen von Feldgeräten T1, T2 verwendet werden. Eine Gerätebeschreibung und eine entsprechende Gerätebeschreibungsdatei ist zur Bedienung eines Feldgerätes T1, T2 vermittels des Bediengerätes BG nicht vorgesehen.

### Bezugszeichenliste

- T1: erstes Feldgerät
- T2: zweites Feldgerät
- F1: erste Funktionalität
- F2: zweite Funktionalität
- F3: dritte Funktionalität
- F4: vierte Funktionalität
- P1: erstes Bedienprogramm
- P2: zweites Bedienprogramm
- P3: drittes Bedienprogramm
- P4: viertes Bedienprogramm
- BG: Bediengerät
- AS: Verbindung zu Server mit

## Patentansprüche

1. Verfahren zum Bedienen eines Feldgerätes (T1, T2) der Prozessautomatisierungstechnik,
wobei Daten vermittels wenigstens eines Protokolls zwischen dem Feldgerät (F1, F2) und einem Bedienprogramm (P1, P2, P3, P4) ausgetauscht werden, wobei das Protokoll Basiskommandos aufweist, über die jedes mit dem entsprechenden Protokoll kompatible Feldgerät verfügen muss und über welche Basiskommandos Basisfunktionen (F1, F2, F3, F4) des Feldgerätes aufgerufen werden, über welche Basisfunktionen (F1, F2, F3, F4) jedes mit dem Protokoll kompatible Feldgerät (T1, T2) verfügt,
**dadurch gekennzeichnet,**
**dass** nur Basiskommandos des Protokolls verwendet werden, um Daten zwischen dem Bedienprogramm (P1, P2, P3, P4) und dem Feldgerät (T1, T2) zu übertragen.

2. Verfahren nach einem der vorherigen Ansprüche, **dadurch gekennzeichnet,**
**dass** Daten zwischen dem Feldgerät (T1, T2) und dem Bedienprogramm (P1, P2, P3, P4) übertragen werden, ohne dass eine Gerätebeschreibungsdatei verwendet wird,
wobei die Gerätebeschreibungsdatei angibt, vermittels welcher der zur Verfügung stehenden Ergänzungskommandos des verwendeten Protokolls, die Ergänzungsfunktionen des Feldgerätes (T1, T2) abrufbar sind,

3. Verfahren nach einem der vorherigen Ansprüche, **dadurch gekennzeichnet,**
**dass** in dem Bedienprogramm (P1, P2, P3, P4) Basiskommandos entsprechend einer vorgegebenen Reihenfolge hinterlegt werden, entsprechend welcher Reihenfolge die Basiskommandos an das Feldgerät (T1, T2) übermittelt werden.

4. Verfahren nach einem der vorherigen Ansprüche, **dadurch gekennzeichnet,**
**dass** aus den vermittels der Basiskommandos des Protokolls abgefragten Daten, bei denen es sich insbesondere um eine Gerätekennung und/oder Messwerte des Feldgerätes (T1, T2) handelt, eine Anzeige auf einer Anzeigeeinheit des Bediengerätes (BG) erstellt wird, die bspw. einen Messwert, einen Messwertverlauf, einen daraus abgeleiteten Wert oder einen Zustand des Feldgerätes (T1, T2) angibt.

5. Verfahren nach einem der vorherigen Ansprüche, **dadurch gekennzeichnet,**
**dass** vermittels des Bedienprogramms (P1, P2, P3, P4) Daten des Feldgerätes (T1, T2) dargestellt werden, welche Daten von dem Feldgerät (T1, T2) über ein einziges Basiskommando bzw. höchstens zwei Basiskommandos abgerufen werden.

6. Verfahren nach dem vorherigen Anspruch, **dadurch gekennzeichnet, dass** das Bedienprogramm zur Darstellung der von mehreren Feldgeräten (T1, T2) vermittels eines einzigen Basiskommandos abgerufenen Daten dient.

7. Verfahren nach einem der vorherigen Ansprüche, **dadurch gekennzeichnet,**
**dass** vermittels jeweils eines Bedienprogramms (P1, P2, P3, P4) Daten von mehreren Feldgeräten (T1, T2) dargestellt werden, welche Daten vermittels eines einzigen Basiskommandos von dem jeweiligen Feldgerät (T1, T2) abgerufen werden, wobei die Feldgeräte (T1, T2) vorzugsweise über einen Feldbus miteinander verbunden sind.

8. Verfahren nach einem der vorherigen Ansprüche, **dadurch gekennzeichnet,**
**dass** eine in dem Feldgerät (T1, T2) vorliegende und an das Bedienprogramm (P1, P2, P3, P4) übertragene Konfiguration des Feldgerätes (T1, T2) mit einer in dem Bedienprogramm (P1, P2, P3, P4) vorliegenden Referenzkonfiguration des Feldgerätes (T1, T2) vermittels des Bedienprogramms (P1, P2, P3, P4) verglichen wird,
und **dass** bei einer von der Referenzkonfiguration abweichenden Konfiguration des Feldgerätes (T1, T2), die Referenzkonfiguration an das Feldgerät (T1, T2) übertragen wird.

9. Verfahren nach einem der vorherigen Ansprüche, **dadurch gekennzeichnet,**
**dass** das Bedienprogramm (P1, P2, P3, P4) auf einem Handbediengerät (BG) abläuft,
welches vorzugsweise eine Internetverbindung aufweist.

10. Verfahren nach dem vorherigen Anspruch, **dadurch gekennzeichnet, dass** das Bedienprogramm (P1, P2, P3, P4) von einem Server über das Internet in einen Speicher des Bediengerätes (BG) übertragen wird.

11. Verfahren nach dem vorherigen Anspruch, **dadurch gekennzeichnet, dass** auf dem Server mehrere Bedienprogramme (P1, P2, P3, P4) zur Verfügung gestellt werden, um das Feldgerät (T1, T2) zu bedienen, wobei durch die Bedienprogramme (P1, P2, P3, P4) unterschiedliche Bedienfunktionen (P1, P2, P3, P4) zur Verfügung gestellt werden.

12. Verfahren nach dem vorherigen Anspruch, **dadurch gekennzeichnet, dass** das Feldgerät (T1, T2) eine insbesondere drahtlose Kommunikationsschnittstelle aufweist, wobei Daten zwischen dem Feldgerät (T1, T2) und dem Bediengerät (BG) übertragen werden.

13. Feldgerät (T1, T2) zur Durchführung des Verfahrens nach einem der vorherigen Ansprüche mit einer insbesondere drahtlosen Kommunikationsschnittstelle.

14. Bediengerät (BG) mit einem Bedienprogramm (P1, P2, P3, P4) zur Durchführung des Verfahrens nach einem der Ansprüche 1 bis 13.

15. Computerprogrammprodukt mit einem computerlesbaren Speicher in dem Programmcodemittel hinterlegt sind, die wenn sie von einem Computersystem ausgeführt werden, das Verfahren nach einem der vorherigen Ansprüche 1 bis 12 ausführen.

## Claims

1. Procedure for operating a field device (T1, T2) used in process automation technology,
wherein data are exchanged between the field device (F1, F2) and an operating program (P1, P2, P3, P4) by means of at least a protocol,
wherein the protocol comprises basic commands, which each field device compatible with the corresponding protocol must have,
and via said basic commands basic functions (F1, F2, F3, F4) of the field device are called, wherein each field device (T1, T2) compatible with the protocol has said basic functions (F1, F2, F3, F4),
**characterized in that**
only basic commands of the protocol are used to transmit data between the operating program (P1, P2, P3, P4) and the field device (T1, T2).

2. Procedure as claimed in one of the previous claims, **characterized in that**
the data are transmitted between the field device (T1, T2) and the operating program (P1, P2, P3, P4) with the use of a device description file,
wherein the device description file indicates which of the available supplementary commands of the protocol used can be used to called up the supplementary functions of the field device (T1, T2).

3. Procedure as claimed in one of the previous claims, **characterized in that** the basic commands are saved in the operating program (P1, P2, P3, P4) according to a predetermined sequence, wherein the basic commands are transmitted to the field device (T1, T2) according to said sequence.

4. Procedure as claimed in one of the previous claims, **characterized in that** a display is created on a display unit of the operating device (BG) on the basis of the data polled using the basic commands of the protocol, said data particularly involving a device ID and/or measured values of the field device (T1, T2), wherein said display indicates, for example, a measured value, a measured value curve, a value derived from this curve, or a state of the field device (T1, T2).

5. Procedure as claimed in one of the previous claims, **characterized in that** data of the field device (T1, T2) are presented by means of the operating program (P1, P2, P3, P4), said data being retrieved from the field device (T1, T2) via a single basic command or a maximum of two basic commands.

6. Procedure as claimed in the previous claim, **characterized in that** the operating program is used to present the data retrieved from several field devices (T1, T2) via a single basic command.

7. Procedure as claimed in one of the previous claims, **characterized in that** data from multiple field devices (T1, T2) presented by means of one operating program (P1, P2, P3, P4) in each case, wherein said data are retrieved from the field device in question (T1, T2) via a single basic command, wherein the field devices (T1, T2) are preferably interconnected via a fieldbus.

8. Procedure as claimed in one of the previous claims, **characterized in that**
a configuration of the field device (T1, T2) which is present in the field device (T1, T2) and transmitted to the operating program (P1, P2, P3, P4) is compared with a reference configuration of the field device (T1, T2) which is present in the operating program (P1, P2, P3, P4), P4) by means of the operating program (P1, P2, P3, P4),
and, if the configuration of the field device (T1 , T2) deviates from the reference configuration, the reference configuration is transmitted to the field device (T1 , T2).

9. Procedure as claimed in one of the previous claims, **characterized in that** the operating program (P1, P2, P3, P4) runs on a portable operating device (BG), which preferably has an Internet connection.

10. Procedure as claimed the previous claim, **characterized in that** the operating program (P1, P2, P3, P4) is transmitted from a server to a memory of the operating device (BG) via the Internet.

11. Procedure as claimed the previous claim, **characterized in that** several operating programs (P1, P2, P3, P4) are available on the server to operate the field device (T1, T2), wherein different operating functions (P1, P2, P3, P4) are made available by the operating programs (P1, P2, P3, P4).

12. Procedure as claimed the previous claim, **characterized in that** the field device (T1, T2) has a communication interface, particularly wireless, wherein data are transmitted between the field device (T1, T2) and the operating device (BG).

13. Field device (T1, T2) designed to perform the procedure as claimed in one of the previous claims with a communication interface, particularly wireless.

14. Operating device (BG) with an operating program (P1, P2, P3, P4) designed to perform the procedure as claimed in one the Claims 1 to 13.

15. Computer program product with a computer-readable memory in which program code is saved which, when run by a computer system, executes the procedure as claimed in one of the Claims 1 to 12.

## Revendications

1. Procédé destiné à l'utilisation d'un appareil de terrain (T1, T2) de la technique d'automatisation des process,
des données étant échangées au moyen d'au moins un protocole entre l'appareil de terrain (F1, F2) et un programme de commande (P1, P2, P3, P4),
le protocole comprenant des commandes de base, dont chaque appareil de terrain compatible avec le protocole correspondant doit disposer,
et commandes de base à travers lesquelles des fonctions de base (F1, F2, F3, F4) de l'appareil de terrain doivent être appelées, fonctions de base (F1, F2, F3, F4) dont chaque appareil de terrain (T1, T2) compatible avec le protocole dispose,
**caractérisé**
**en ce que** les commandes de base du protocole ne sont utilisées que pour transmettre des données entre le programme de commande (P1, P2, P3, P4) et l'appareil de terrain (T1, T2).

2. Procédé selon l'une des revendications précédentes, **caractérisé**
**en ce que** les données entre l'appareil de terrain (T1, T2) et le programme de commande (P1, P2, P3, P4) sont transmises sans utiliser un fichier de description d'appareil,
le fichier de description d'appareil indiquant au moyen de laquelle des commandes supplémentaires disponibles du protocole utilisé permet d'appeler les fonctions supplémentaires de l'appareil de terrain (T1, T2).

3. Procédé selon l'une des revendications précédentes, **caractérisé**
**en ce que** les commandes de base sont mémorisées dans le programme de commande (P1, P2, P3, P4) selon une séquence prédéterminée, séquence selon laquelle les commandes de base sont transmises à l'appareil de terrain (T1, T2).

4. Procédé selon l'une des revendications précédentes, **caractérisé**
**en ce qu'**un affichage est créé sur une unité d'affichage de l'appareil de commande (BG) à partir des données interrogées au moyen des commandes de base du protocole, données concernant lesquelles il s'agit notamment d'une identification d'appareil et/ou de valeurs mesurées de l'appareil de terrain (T1, T2), lequel affichage indique, par exemple, une valeur mesurée, une courbe de valeur mesurée, une valeur dérivée de celle-ci ou un état de l'appareil de terrain (T1, T2).

5. Procédé selon l'une des revendications précédentes, **caractérisé**
**en ce que** les données de l'appareil de terrain (T1, T2) sont représentées au moyen du programme de commande (P1, P2, P3, P4), lesquelles données sont extraites de l'appareil de terrain (T1, T2) via une seule commande de base ou au maximum deux commandes de base.

6. Procédé selon la revendication précédente, **caractérisé**
**en ce que** le programme de commande est utilisé pour afficher les données récupérées de plusieurs appareils de terrain (T1, T2) au moyen d'une seule commande de base.

7. Procédé selon l'une des revendications précédentes, **caractérisé**
**en ce que** des données de plusieurs appareils de terrain (T1, T2) sont représentées respectivement au moyen d'un programme de commande (P1, P2, P3, P4), lesquelles données sont récupérées au moyen d'une seule commande de base de l'appareil de terrain respectif (T1, T2), les appareils de terrain (T1, T2) étant de préférence reliés entre eux par un bus de terrain.

8. Procédé selon l'une des revendications précédentes, **caractérisé**
**en ce qu'**une configuration de l'appareil de terrain (T1, T2) présente dans l'appareil de terrain (T1, T2) et transmise au programme de commande (P1, P2, P3, P4) est comparée à une configuration de référence de l'appareil de terrain (T1, T2) présente dans le programme de commande (P1, P2, P3, P4), P4) au moyen du programme de commande (P1, P2, P3, P4),
et, si la configuration de l'appareil de terrain (T1 , T2) s'écarte de la configuration de référence, en ce que la configuration de référence est transférée à l'appareil de terrain (T1 , T2).

9. Procédé selon l'une des revendications précédentes, **caractérisé en ce que** le programme de commande (P1, P2, P3, P4) est exécuté sur un appareil de commande portable (BG), qui dispose de préférence d'une connexion Internet.

10. Procédé selon la revendication précédente, **caractérisé**
**en ce que** le programme de commande (P1, P2, P3, P4) est transféré d'un serveur via Internet dans une mémoire de l'appareil de commande (BG).

11. Procédé selon la revendication précédente, **caractérisé**
**en ce que** plusieurs programmes de commande (P1, P2, P3, P4) sont mis à disposition sur le serveur afin de faire fonctionner l'appareil de terrain (T1, T2), différentes fonctions de commande (P1, P2, P3, P4) étant mises à disposition par les programmes de commande (P1, P2, P3, P4).

12. Procédé selon la revendication précédente, **caractérisé**
**en ce que** l'appareil de terrain (T1, T2) comporte une interface de communication, notamment sans fil, des données étant transmises entre l'appareil de terrain (T1, T2) et l'appareil de commande (BG).

13. Appareil de terrain (T1, T2) destiné à la réalisation du procédé selon l'une des revendications précédentes avec une interface de communication, notamment sans fil.

14. Appareil de commande (BG) avec un programme de commande (P1, P2, P3, P4) destiné à la réalisation du procédé selon l'une des revendications 1 à 13.

15. Produit de programme informatique avec une mémoire lisible par un ordinateur, dans laquelle sont enregistrés des moyens de code de programme qui, lorsqu'ils sont exécutés par un système informatique, exécutent le procédé selon l'une des revendications 1 à 12.
